# EUROPEAN PATENT SPECIFICATION

(11) **EP 4 714 516 B1**
(45) Date of publication and mention of the grant of the patent: **19.08.2026**
(21) Application number: 25153685.0
(22) Date of filing: 24.01.2025
(51) Int. Cl.: A63G 23/00, A63B 26/00

(54) **SENSORY INTEGRATION CAROUSEL FOR A CHILD**
SENSORISCHES INTEGRATIONSKARUSSELL FÜR EIN KIND
CARROUSEL D'INTÉGRATION SENSORIELLE POUR ENFANT

(30) Priority: 18.09.2024 CN 202411300966
(43) Date of publication of application: 25.03.2026
(73) Proprietor: Zhejiang Tongxi Education Technology Co., LTD., Wenzhou, Zhejiang (CN)
(72) Inventor: XU, Dexiao, Wenzhou (CN)
(74) Representative: Sun, Yiming

(56) References cited:
- CN-U- 214 344 164
- DE-B4- 102010 050 302
- DE-U1- 29 923 044

## Description

### FIELD OF THE INVENTION

The present disclosure relates to a field of sensory integration toys, and in particular to, a sensory integration carousel for a child.

### BACKGROUND OF THE INVENTION

When a child's sensory integration capability is insufficient or dysfunctional, it may affect a coordinated operation of functional regions of the brain, sensory organs and the body, thereby in turn causing problems in learning and life, etc. Sensory integration toys are a kind of training tool that can provide sensory stimulation and interactive experience, which can help children exercise, and improve their sensory integration capability during play, so as to promote their healthy growth.

Sensory integration carousel is a sensory integration toy for children to ride on the carousel to rotate their body to experience a rotating sensation. Most of the sensory integration carousels on the market nowadays are composed of three parts of a carousel, a base, and a connecting member. The base is used for placing on the ground. An upper end of the connecting member is detachably connected to the carousel. A lower end of the connecting member is detachably connected to the base, and it can be rotated and connected, so that the carousel can be driven to rotate with respect to the base and the ground. And the connecting member of this technical solution is mainly connected with the carousel via a screw, which is prone to loosening and falling off after a long time of use, leading to a risk of children such as tipping over and slipping during using and rotating the sensory integration carousel, and the safety is low.

CN214344164U discloses a child vestibular equilibrium sense training device. The child vestibular equilibrium sense training device comprises a base, a rotating seat and a supporting strip located between the base and the rotating seat. A rotating device is arranged above the supporting strip, and the rotating seat can rotate in the circumferential direction with the rotating device as the center. Two ends of the supporting strip are fixedly connected with the base. The trainer can improve the balance feeling of the body of a child and improve the carsickness condition.

### SUMMARY

The present disclosure provides a sensory integration carousel for a child for the shortcomings in the prior art, and solves the technical problems of unstable connection and low safety between the connecting member and the carousel in the prior art. To achieve the above-mentioned object, the present disclosure is set out in the appended claims.

The sensory integration carousel for a child provided by the present disclosure, includes a base unit and a carousel unit. The carousel unit includes a carrying structure and a connecting structure connected to a lower portion of the carrying structure. The carrying structure and the connecting structure are processed and connected as an integrated structure during production, and the connection is stable and reliable. And the supporting member of the connecting structure is wrapped by a lower part of the carrying structure, so that the supporting member of the connecting structure is firmly wrapped and fixed within lower part of the carrying structure, and the connecting structure will not fall off from the carrying structure, thus greatly improving the stability and reliability of the connection between the connecting structure and the carrying structure, and providing higher safety in the process of sensory integration training for children, and is more suitable for sensory integration training for children. And the connecting member and the supporting member form an integrated structure, therefore, it is not necessary to provide additional screws for connection, and the structure is simplified. Due to the use of a wrapped connection method, the supporting member in the connecting structure is wrapped inside the carrying structure, so that the connection between the connecting structure and carrying structure does not require the use of additional fasteners such as screws, avoiding situations such as loose screws after prolonged use. The carousel unit is arranged at an angle relative to the support interface of the base unit, after the carousel unit is connected with the base unit via the rotation shaft. And the carousel unit is rotatably disposed along an axial direction of the rotation shaft via the rotation shaft relative to the base unit, thereby making rotating process of the carousel unit has a high and low difference, when the children ride in the carousel unit to rotate the body, the children not only can experience the feeling of the horizontal rotation, but also can experience the feeling of the rise and fall, the sensory stimulation of children is more comprehensive and increase the fun of play, can stimulate the interest of children in sensory integration training. A carrying portion is provide at an upper part of the carrying structure for a human's buttocks, legs or other toys and other items to rest against, and is in an arc shape, so as to allow children to ride on the carrying portion to rotate, or place various toys to rotate on the carrying portion to play. The carrying portion is configured as an arc shaped surface, and is more in line with the structure of the human body. The stability for the children to ride on the carrying portion is better, and the children are not easy to rotate outside the rotating carousel unit under the centrifugal force. This further improves the safety of sensory integration training process for children. The support interface is arranged along a circumferential direction of a lower part of the base structure, which can support the pressure force exerted at various angles during the rotation of the carousel unit in 360° directions. And an outer surface of the base structure is disposed in an arc shape in the direction to a bottom of the base structure from a top of the base structure, so that during the rotation of the carousel unit, the pressure forces on the various parts of the base unit are relatively uniform, so that the structure is stable and strong, and not easy to be damaged, and the safety of sensory integration training process for the children is further improved.

Additional aspects and advantages of the present disclosure will be given, in part, a part will become apparent from the following description, or will be learned through a practice of the present disclosure.

### BRIEF DESCRIPTION OF DRAWINGS

The accompanying drawings illustrated herein are used to provide a further understanding of the present disclosure, and form a part of the present disclosure, and the schematic embodiments of the present disclosure and their description are used to explain the present disclosure, and do not constitute an improper limitation of the present disclosure. In the accompanying drawings:
FIG. 1 illustrates a schematic diagram of a structure of a sensory integration carousel for a child according to the first embodiment of the present disclosure;
FIG. 2 illustrates a schematic diagram of a structural decomposition of the sensory integration carousel for the child according to the first embodiment of the present disclosure;
FIG. 3 illustrates a schematic diagram of a structure of a carousel unit according to the first embodiment of the present disclosure;
FIG. 4 illustrates a schematic diagram of a structural decomposition of the carousel unit according to the first embodiment of the present disclosure;
FIG. 5 illustrates a schematic diagram I of a structure of a base unit according to the first embodiment of the present disclosure;
FIG. 6 illustrates a schematic diagram II of the structure of the base unit according to the first embodiment of the present disclosure;
FIG. 7 illustrates a schematic diagram I of a cross-sectional structure of the sensory integration carousel for the child according to the first embodiment of the present disclosure;
FIG. 8 illustrates a schematic diagram II of a cross-sectional structure of the sensory integration carousel for the child according to the first embodiment of the present disclosure;
FIG. 9 illustrates a schematic diagram of the structure of the sensory integration carousel for the child according to the second embodiment of the present disclosure;
FIG. 10 illustrates a structural schematic diagram of a connecting structure according to the second embodiment of the present disclosure;
FIG. 11 illustrates a schematic diagram of a cross-sectional structure of the sensory integration carousel for the child according to the second embodiment of the present disclosure;
FIG. 12 illustrates a schematic diagram of the structure of the sensory integration carousel for the child according to the third embodiment of the present disclosure;
FIG. 13 illustrates a schematic diagram of the structure of the carousel unit according to the third embodiment of the present disclosure.

Reference signs: 1-base unit, 10-support interface, 11-base structure, 111-base frame, 112-mounting plate, 1121-mounting base, 113-base plate, 1130-open-worked structure, 1131-first open-worked channel, 1132-second open-worked channel, 1133-base member, 11331-base portion, 114-second support components, 12-mounting structure, 110-mounting channel, 1101-upper opening, 1102-lower opening, 120-connecting channel, 121-mounting support component, 1211-bearing, 2-carousel unit, 21-carrying structure, 211-carrying plate, 2111-carrying portion, 2112-grip member, 2113-external flange, 2114-positioning pillar, 2115-grip channel, 212-first support components, 213-wrapping region, 2131-first region, 2132-second region, 2133-third region, 214-first limit member, 215-second limit member, 22-connecting structure, 221-supporting member, 2211-positioning channel, 222-connecting member, 2221-connecting shaft, 2222-rotation shaft, 2223-connecting plate, 22231-reinforced column, 2224-limit bracket, 2225-butt joint portion, 223-fastening structure, 2231-fastener, 22311-connecting end, 22312-operating end, 2232-limit stop.

### DETAILED DESCRIPTION OF THE EMBODIMENTS

In order to make the objects, technical solutions and advantages of the embodiments of the present disclosure clearer, the technical solutions of the embodiments of the present disclosure will be described clearly and completely in the following in combination with the accompanying drawings of the embodiments of the present disclosure.

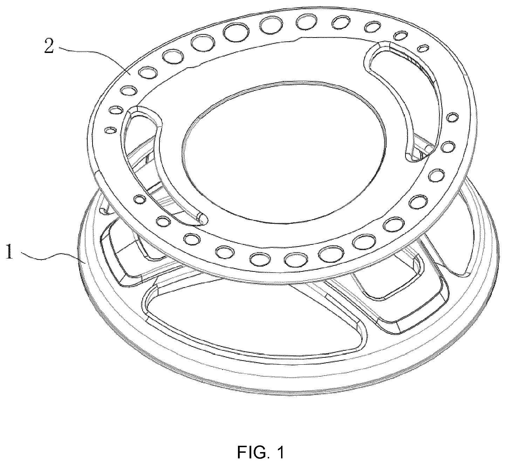

As shown in FIGs. 1-8, a first embodiment of the present disclosure provides a sensory integration carousel for a child, including a base unit 1 and a carousel unit 2. The base unit 1 includes a base structure 11 for placing on a support countertop surface such as ground, floor surfaces, and a mounting structure 12 provided in an upper part of the base structure 11. Wherein, a support interface 10 is formed at a lower part of the base structure 11 and in a circumferential direction for pressed against the support table surface. The mounting structure 12 includes a mounting channel 110 through the base structure 11, a mounting support component 121 disposed within the mounting channel 110, and a connecting channel 120 disposed along a center of the mounting support component 121 and through the base structure 11. The carousel unit 2 includes a carrying structure 21 and a connecting structure 22 connected to a lower portion of the carrying structure 21. Wherein, the carrying structure is connected with the connecting structure as an integrated structure. The connecting structure 22 includes a supporting member 221 wrapped by a lower part of the carrying structure 21 and a connecting member 222 connected to the supporting member 221. Due to the use of a wrapped connection method, the supporting member 221 in the connecting structure 22 is wrapped inside the carrying structure 21, so that the connection between the connecting structure 22 and carrying structure 21 does not require the use of additional fasteners such as screws, avoiding situations such as loose screws after prolonged use. In actual production, the metal material connecting structure 22 can be placed in the injection mold used to generate the carrying structure 21 for injection molding operations, so that the generated carrying structure 21 can be wrapped around the supporting member 221. Of course, other generation processes can also be used. Wherein, a lower part of the connecting member 222 is disposed as a rotation shaft 2222. And the rotation shaft 2222 is embedded in the connecting channel 120 and connected to the base unit 1, so that the carousel unit 2 is driven to rotate and move relative to the base unit 1. The sensory integration carousel according to the present embodiment, includes a base unit 1 and a carousel unit 2. The carousel unit 2 includes a carrying structure 21 and a connecting structure 22 connected to a lower portion of the carrying structure 21. The carrying structure 21 and the connecting structure 22 are processed and connected as an integrated structure during production, and the connection is stable and reliable. And the supporting member 221 of the connecting structure 22 is wrapped by a lower part of the carrying structure 21, so that the supporting member 221 of the connecting structure 22 is firmly wrapped and fixed within lower part of the carrying structure 21, and the connecting structure 22 will not fall off from the carrying structure 21, thus greatly improving the stability and reliability of the connection between the connecting structure 22 and the carrying structure 21, and providing higher safety in the process of sensory integration training for children, and is more suitable for sensory integration training for children. And the connecting member 222 and the supporting member 221 form an integrated structure, therefore, it is not necessary to provide additional screws for connection, and the structure is simplified. The carousel unit 2 is arranged at an angle relative to the support interface 10 of the base unit 1, after the carousel unit 2 is connected with the base unit 1 via the rotation shaft 2222. And the carousel unit 2 is rotatably disposed along an axial direction of the rotation shaft 2222 via the rotation shaft 2222 relative to the base unit 1, thereby making rotating process of the carousel unit 2 has a high and low difference, when the children ride in the carousel unit 2 to rotate the body, the children not only can experience the feeling of the horizontal rotation, but also can experience the feeling of the rise and fall, the sensory stimulation of children is more comprehensive and increase the fun of play, can stimulate the interest of children in sensory integration training. A carrying portion 2111 is provide at an upper part of the carrying structure 21 for a human's buttocks, legs or other toys and other items to rest against, and is in an arc shape, so as to allow children to ride on the carrying portion 2111 to rotate, or place various toys to rotate on the carrying portion 2111 to play. The carrying portion 2111 is configured as an arc shaped surface, and is more in line with the structure of the human body. The stability for the children to ride on the carrying portion 2111 is better, and the children are not easy to rotate outside the rotating carousel unit 2 under the centrifugal force. This further improves the safety of sensory integration training process for children. The support interface 10 is arranged along a circumferential direction of a lower part of the base structure 11, which can support the pressure force exerted at various angles during the rotation of the carousel unit 2 in 360° directions. And an outer surface of the base structure 11 is disposed in an arc shape in the direction to a bottom of the base structure from a top of the base structure, so that during the rotation of the carousel unit 2, the pressure forces on the various parts of the base unit 1 are relatively uniform, so that the structure is stable and strong, and not easy to be damaged, and the safety of sensory integration training process for the children is further improved.

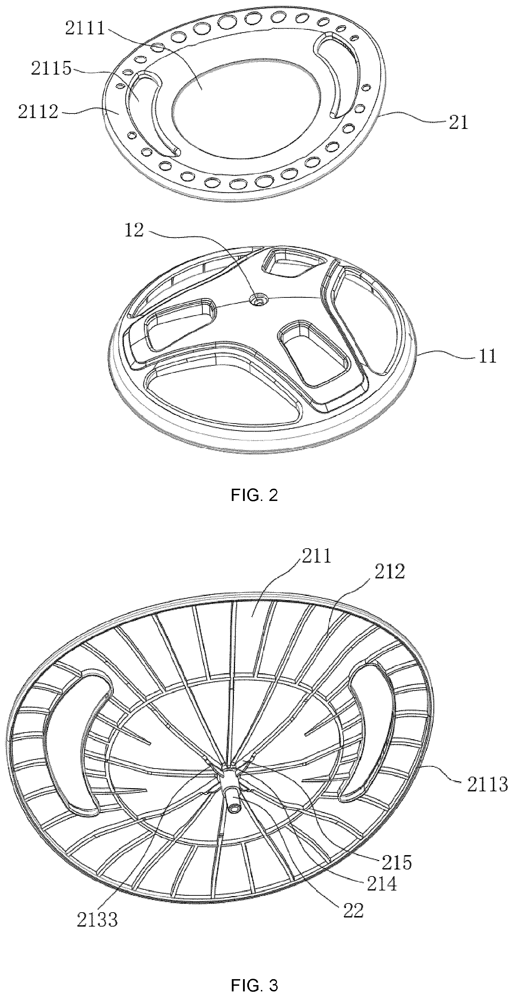

As shown in FIG. 2, the carrying structure 21 includes a carrying plate 211 and a grip member 2112 disposed on the carrying plate 211 for gripping when the carrying structure 21 is driven to rotate, and the carrying portion 2111 is configured as a panel structure formed in a circumferential direction from an upper surface of the carrying plate 211, so that the child can further be prevented from flying out of the carousel unit 2 under the centrifugal force of the rotation by gripping the grip member 2112 with the hands, when a child rides on the carrying portion 2111 and rotates, which further improves the safety of the child in the process of sensory integration training for children, and the grip member 2112 includes a portion of the external flange of the carrying portion 2111, thereby simplifying the structure. And in other embodiments, the grip member 2112 can be set up as a stand-alone structure connected to the carrying portion 2111, which can be used for the child's grip in the process of the child's rotation as well.

As shown in FIG. 3, in some specific embodiments, a plurality of first support components 212 for providing a support force are provided at a lower portion of the carrying plate 211. And the first support components 212 are provided as a block-like structure spaced at an interval and arranged linearly along a lower surface of the carrying plate 211 and protruding out from a bottom end surface of the carrying plate 211. The carrying structure 21 is made of plastic material, which is processed and molded by production processes such as injection molding, and blow molding to facilitate mass production. And the first support components 212 are used to strengthen the structural strength of the carrying plate 211, and to improve the stability and carrying capacity of the carrying structure 21 for supporting children. In other embodiments, the first support components 212 may not be provided either, and the carrying structure 21 may be made of other materials such as metal, wood, or the like.

In some specific embodiments, there are a number of first support components 212, wherein a part of the first support components 212 is provided in a strip-like structure and arranged in a clockwise direction with the center of the carrying plate 211, which can provide a direct and strong support for the pressure force exerted on the carrying plate 211 at various angles when a child rides on the carrying portion 2111 to avoid breakage of the carrying plate 211. And one first support components 212 is provided in a circular structure and arranged coaxially with the connecting shaft 2221, and the radius of the one first support components 212 is provided to begreater than the radius of the connecting shaft 2221. Wherein a portion of the first support components 212 in a strip-like structure are arranged on an outer side of the first support components 212 in the circular structure. And one end of the first support components 212 is combined with the external flange 2113, and the other end of the first support components 212 is combined with the first support components 212 of the circular structure. And wherein another portion of the first support components 212 in the strip-like structure are arranged on an inner side of the first support components 212 of the circular structure; one end of the another portion of the first support components 212 is combined with the first limit member 214; and the other end of the another portion of the first support components 212 is combined with the first support components 212 of the circular structure, so as to make the structure of the carrying structure 21 more stable and sturdy. In other embodiments, this first support components 212 may also be provided with other shaped structures such as a curved structure, all of which can be used to strengthen the structural strength of the carrying plate 211.

As shown in FIGs. 3, 7-8, in some specific embodiments, the carrying plate 211 has an external flange 2113. The external flange 2113 is provided as bosses distributed along an outer circumference of the carrying plate 211 and formed by extending in a direction toward a bottom of the carrying portion 2111 from an upper surface of the carrying portion 2111. And when the carousel unit 2 is rotated with respect to the base unit 1 via the rotation shaft 2222, the curved surface from the highest point of the carrying portion 2111 to the center of the carrying portion 2111 is configured at an M angle to the support interface 10, which is consistent with the structure of the human body, so that a child is capable to place his or her calf against the external flange 2113 when the child rides on the carrying portion 2111, and the calf is in face-to-face contact with the external flange 2113 to avoid scraping the leg, which improves the comfort of the child riding on the carrying portion 2111. An end portion of the first support components 212 is combined with an inner surface of a portion of the external flange of the carrying plate 211, which can strengthen the structural strength of the external flange 2113, improve the stability and load carrying capacity of the external flange 2113 for supporting the child, and prevent the external flange 2113 from fracturing, that is, strengthen the structural strength of an outer periphery of the carrying plate 211, and prevent an outer peripheral structure of the carrying plate 211 from fracturing, thereby further improving the overall structural strength of the carrying structure 21.

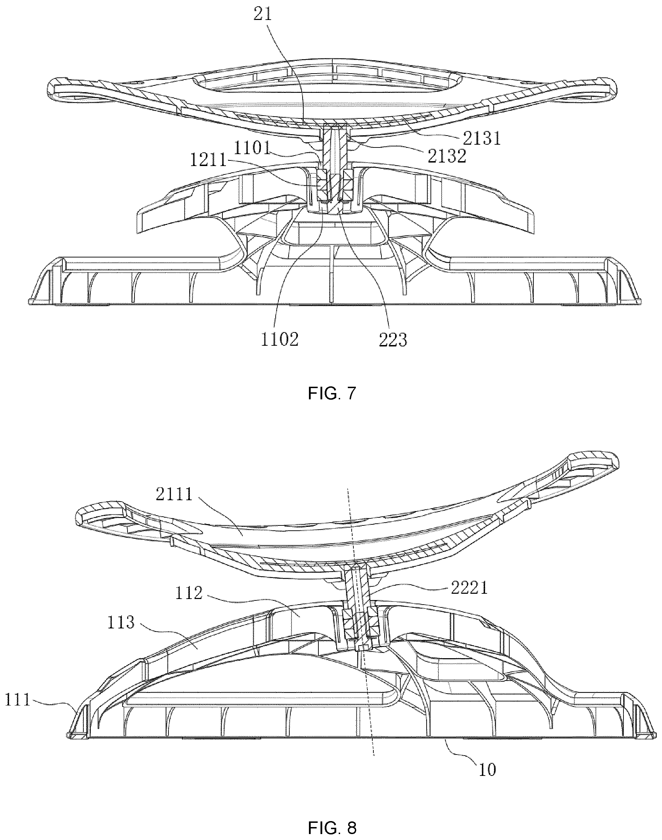

In some specific embodiments, the connecting structure 22 is made of metal material such as iron and aluminum, structurally stable and sturdy, making the overall structure of the carousel unit 2 with high stability and high carrying capacity. As shown in FIGs. 7 and 8, an upper portion of the connecting structure 22 is completely covered by a lower structure of the carrying structure 21, which can fully wrap and fix an upper portion of the connecting structure 22, and improve the stability of the connection of the connecting structure 22 with the carrying structure 21. And in some other embodiments, an upper portion of the connecting structure 22 can also be disposed as partially covered by a lower structure of the carrying structure 21, which can also firmly wrap and fix the upper portion of the connecting structure 22 within a lower structure of the carrying structure 21.

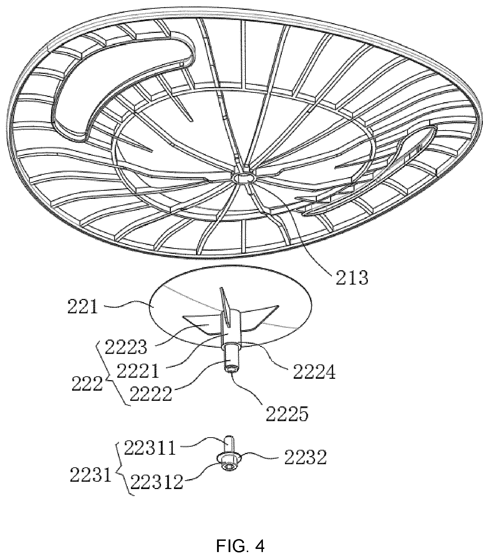

As shown in FIG. 4, in some specific embodiments, a wrapping region 213 is provided in a lower portion of the carrying structure 21, and the supporting member 221 is located within the wrapping region 213 and covered by an outer end surface of the carrying structure 21, which can limit the supporting member 221 within the carrying structure 21 along the axial direction of the rotation shaft 2222, and prevent the connecting structure 22 from moving relative to the carrying structure 21 along the axial direction of the rotation shaft 2222, and prevent the connecting structure 22 from falling off from the carrying structure 21.

As shown in FIG. 4, in some specific embodiments, the connecting member 222 includes a connecting shaft 2221 connected to the supporting member 221. And a lower portion of the connecting shaft 2221 forms the rotation shaft 2222. And a connecting plate 2223 protrudes outwardly at an upper portion of the connecting shaft 2221 and is arranged in a length direction of the connecting shaft 2221. And a part of the structure of an upper portion of the connecting shaft 2221 and the connecting plate 2223 is located within the wrapping region 213 and covered by an outer end surface of the carrying structure 21, capable of limiting the connecting plate 2223 within the carrying structure 21 along a circumferential direction of the rotation shaft 2222, avoiding movement of the connecting structure 22 relative to the carrying structure 21 along a circumferential direction of the rotation shaft 2222, and preventing rotation of the connecting structure 22 relative to the carrying structure 21.

In some specific embodiments, the supporting member 221 is provided as a panel structure corresponding to an arrangement direction of the carrying portion 2111, which has a larger contact region with the carrying structure 21, and is more capable of avoiding axial movement of the connecting structure 22 relative to the carrying structure 21 along the rotation shaft 2222, and more capable of preventing the connecting structure 22 from falling off from the carrying structure 21. In this embodiment, the supporting member 221 is provided as a circular disk structure, and the structure is simple. And in other embodiments the supporting member 221 may also be provided as other shaped structures such as a square disk structure, and a pentagram structure. A number of connecting plates 2223 are spaced at an interval and arranged along a circumferential direction of the connecting shaft 2221, and have a larger contact region with the carrying structure 21, is more capable of avoiding circumferential movement of the connecting structure 22 relative to the carrying structure 21 along the rotation shaft 2222, and is more capable of preventing the connecting structure 22 from rotating relative to the carrying structure 21. Each connecting plate 2223 is arranged radially along the connecting shaft 2221 respectively, and is vertically connected to a lower surface of the supporting member 221, so that the connecting plate 2223 forms a triangular support structure between the connecting shaft 2221 and the supporting member 221, which can strengthen the stability and the load carrying capacity of the structure of the supporting member 221, thereby strengthening the stability and load carrying capacity of the overall structure of the carousel unit 2, and is more conducive to avoiding circumferential movement of the connecting structure 22 relative to the carrying structure 21 along the rotation shaft 2222. Of course, in some other embodiments, the supporting member 221 may also be provided with other structures such as a rod structure; and there may be only one the connecting plate 2223; and the connecting plate 2223 may further be arranged at an inclined angle to a radial direction of the connecting shaft 2221, or may further be arranged at an inclined angle a lower surface of the supporting member 221; all of these embodiments realizes mutual positioning of the connecting structure 22 and the carrying structure 21.

As shown in FIG. 3, in some specific embodiments, the carrying structure 21 further includes a first limit member 214 protruding from a lower surface of the carrying plate 211 and arranged in correspondence with an upper portion of the connecting shaft 2221, and a second limit member 215 protruding from a lower surface of the carrying plate 211 and arranged in correspondence with the connecting plate 2223. As shown in FIGs. 7, 8, the wrapping region 213 includes a first region 2131 provided within a lower structure of the carrying plate 211, a second region 2132 provided within the first limit member 214, and a third region 2133 provided within the second limit member 215. The supporting member 221 is wrapped within the first region 2131 and covered by an outer end surface of the carrying plate 211. And a top surface of the supporting member 221 is pressed against or combined with a top surface of the first region 2131. A bottom surface of the supporting member 221 is pressed against or combined with a bottom surface of the first region 2131. And a circumferential side surface of the supporting member 221 is pressed against or combined with a circumferential side surface of the first region 2131, By wrapping the lower part of the supporting member 221 so that it is in contact with the filling material, it is possible to prevent the connecting structure 22 from loosening and detaching from the lower part of the carrying structure 21 by restricting the downward movement of the supporting member 221, thereby firmly wrapping and fixing the supporting member 221 within the first region 2131, avoiding axial or radial movement of the supporting member 221 relative to the carrying plate 211. A part of the structure of an upper portion of the connecting shaft 2221 is wrapped within the second region 2132, and covered by an outer end surface of the first limit member 214. And a circumferential side surface of an upper portion of the connecting shaft 2221 is pressed against or bonded with a circumferential side surface of the second region 2132, By wrapping the upper part of the connecting shaft 2221, it can cooperate with the connecting plate 2223 to more effectively prevent the relative movement between the connecting structure 22 and the carrying structure 21, thereby firmly wrapping and fixing an upper portion of the connecting shaft 2221 within the second region 2132 and avoiding a radial movement of an upper portion of the connecting shaft 2221 relative to the first limit member 214. A part of the structure of the connecting plate 2223 is wrapped within the third region 2133, and covered by an outer end surface of the second limit member 215. One side surface of the connecting plate 2223 is pressed against or bonded to one side surface of the third region 2133. Another side surface of the connecting plate 2223 is pressed against or bonded to another side surface of the third region 2133. And an end surface of the connecting plate 2223 is pressed against or bonded to an end surface of the third region 2133, thereby firmly wrapping and securing the connecting plate 2223 within the third region 2133, so as to avoid circumferential or radial movement of the connecting plate 2223 relative to the second limit member 215, By arranging multiple connecting plates 2223 at intervals along the circumferential direction of the connecting shaft 2221, and wrapping them on both sides of the connecting plate 2223, so that both sides of the connecting plate 2223 are in contact with the filling material, the relative rotation between the connecting structure 22 containing the supporting member 221 and the carrying structure 21 can be prevented by restricting the rotation of the connecting plate 2223. thereby allowing the connecting structure 22 as a whole to be firmly fixed relative to the carrying structure 21 and not to move relative to the carrying structure 21. In other embodiments, it is further possible to locate all of the structure of an upper portion of the connecting shaft 2221 and the connecting plate 2223 within the wrapping region 213 and covered by an outer end surface of the carrying structure 21; or it is further possible to wrap all of the structure of an upper portion of the connecting shaft 2221 within the second region 2132 and covered by an outer end surface of the first limit member 214; or it is further possible to wrap all of the structure of the connecting plate 2223 within the third region 2133 and covered by an outer end surface of the second limit member 215, so as to increase the wrapping range and improve the stability of the wrapping fixation.

As shown in FIG. 7, in some specific embodiments, the mounting support component 121 is provided as at least one bearing 1211, conducive to driving the carousel unit 2 in a smoother rotational movement relative to the base unit 1. The diameters of an upper opening 1101, a lower opening 1102 of the mounting channel 110 are smaller than an outer diameter of the bearing 1211, thereby limiting and supporting the bearing 1211 within the mounting channel 110. While the friction force between side walls of the mounting channel 110 and an outer side of the bearing 1211 can support the bearing 1211, more direct and powerful support is provided to a bottom of the bearing 1211 according to a top wall of a lower opening 1102, thereby greatly improving the load carrying capacity of the base unit, and providing more stable support to the rotation shaft 2222 and the carousel unit 2 as a whole, and limiting a bottom of one lower-end bearing 1211 according to a top wall of a lower opening 1102, limiting a top of one upper-end bearing 1211 according to a bottom wall of an upper opening 1101, which allows the mounting and positioning structure of the bearing 1211 more stable, and prevents the bearing 1211 from falling off with respect to the mounting channel 110, thereby avoiding the risk of the child tipping over or slipping off during the rotating process, and improving the safety of the process of using the bearing 1211. The bearing 1211 and the base structure 11 are processed and connected as an integrated structure during production, and the bearing 1211 is firmly wrapped and fixed in the mounting channel 110, so that the bearing 1211 cannot move relative to the mounting channel 110, and the stability and the fastness of the connection between the bearing 1211 and the base structure 11 are improved.

In some specific embodiments, there are three (3) bearings 1211, with a strong support capacity and a load carrying capacity, resulting in a better overall load carrying capacity of the sensory integration carousel for children. And in other embodiments, the bearings 1211 may also be provided as 2 or other numbers. The bearings 1211 are stacked along a height direction of the mounting channel 110. And the bearings 1211 include outer sleeves limited within the mounting channel 110 along a height direction of the mounting channel 110, and inner sleeves rotatably coupled to an inner side of the outer sleeves. Wherein, the inner sleeves are coaxially arranged with the outer sleeves. And centers of the inner sleeves are combined with each other to form the connecting channel 120.

As shown in FIGs. 4 and 7-8, in some specific embodiments, a limit bracket 2224 is formed in an upper part of the rotation shaft 2222 protruding outwardly in its circumferential direction; and a butt joint portion 2225 is provided at a lower end of the rotation shaft 2222 for engagement connecting with a fastening structure 223; and the rotation shaft 2222 is capable to extend from an upper end of the connecting channel 120 into the connecting channel 120 and is limited relative to a height direction of the connecting channel 120 by being clamped between the limit bracket 2224 and the fastening structure 223 by the inner sleeves of the bearings 1211. And when the carousel unit 2 is driven to rotate, inner sleeves of each bearing 1211 is driven to rotate relative to outer sleeves, so as to realize the rotational connection between the carousel unit 2 and the base unit 1, and to avoid the axial movement of the rotational shaft 2222 relative to the connecting channel 120, thereby preventing the carousel unit 2 from axially moving relative to the base unit 1. And the rotation shaft 2222 and the connecting channel 120 are pressed against or combined with each other, thereby preventing the rotation shaft 2222 from moving radially relative to the connecting channel 120, and preventing the carousel unit 2 from moving radially relative to the base unit 1, so as to realize the mounting, positioning and the rotational connection between the carousel unit 2 and the base unit 1, and the structure is simple and the assembly is convenient. In the present embodiment, an outer wall of the limit bracket 2224 has the same radius as an outer wall of an upper part of the connecting shaft 2221; and both are smoothly connected with each other as an integrated structure, simplifying the structure. And in other embodiments, an outer wall of the limit bracket 2224 may also be spaced at an interval from an outer wall of an upper portion of the connecting shaft 2221.

As shown in FIGs. 4 and 7, in some specific embodiments, the fastening structure 223 includes a fastener 2231 and a limit block 2232. The fastener 2231 has a connecting end 22311 and an operating end 22312 connected to the connecting end 22311. The limit block 2232 is connected to the connecting end 22311 and the operating end 22312. And the butt joint portion 2225 is configured as a docking channel formed by recessing from an end surface of the rotation shaft 2222. The connecting end 22311 extends into the docking channel, and is engagement connected with the rotation shaft 2222; and after the connection, an upper side of the limit block 2232 is pressed against a lower side of inner sleeves of one lower-end bearing 1211. A female threaded structure is provided within the docking channel, and a male threaded structure is provided at the connection end 22311. And the fastener 2231 is tightly connected to the rotation shaft 2222 by a threaded fit between the male threaded structure and the female threaded structure, which facilitates installation or disassembly. In the present embodiment, the fastener 2231 and the limit block 2232 are integrally molded, and the structure is simple and practical. And in other embodiments, the limit block 2232 can also be connected only to either of the connection end 22311 or the operation end 22312. And the fastener 2231 and the limit block 2232 can also be disposed as separate independent structures, the fastener 2231 and the limit block 2232 are embedded outside the connecting end 22311 via the limit stop 2232, and are limited on the operating end 22312, for removable connections.

As shown in FIG. 7, in some specific embodiments, the limit bracket 2224 is arranged within an upper opening 1101 of the mounting channel 110, and spaced at an interval from the sidewalls of the upper opening 1101. And the limit block 2232 is arranged in a lower opening 1102 of the mounting channel, and spaced at an interval from the sidewalls of the lower opening 1102. That is, during rotation process of the carousel unit 2 relative to the base unit 1, the limit bracket 2224 does not contact with an upper opening 1101, and the limit block 2232 does not contact with a lower opening 1102 either, thereby reducing friction, and facilitating smooth rotation of the carousel unit 2.

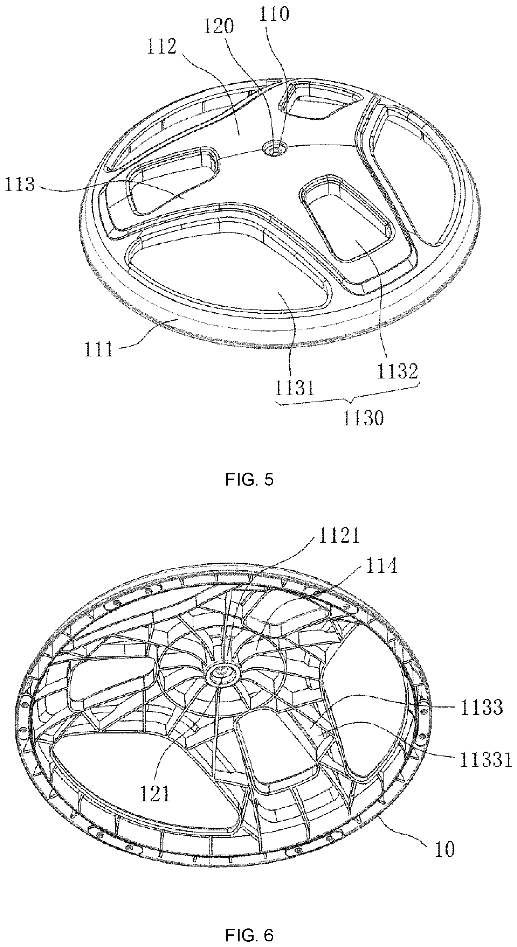

As shown in FIGs. 5-6, 8, in some specific embodiments, the base structure 11 includes a base frame 111 at a bottom of the base structure 11, a mounting plate 112 at a top of the base structure 11, and a base plate 113 arranged along a circumferential direction of the mounting plate 112. An upper end of the base plate 113 is connected to the mounting plate 112 as an integrated structure; and a lower end of the base plate 113 is connected to the base frame 111 as an integrated structure. And the mounting plate 112, the base plate 113 and the base frame 111 are connected in a smooth transition on outer surfaces of the mounting plate 112, and form an arc shaped support structure extending from a top of the mounting plate 112 to a bottom of the base frame 111. The support interface 10 is arranged at a bottom of the base frame 111, and the mounting structure 12 is arranged on the mounting plate 112. The arc shaped support structure is such configured that during rotation of the carousel unit 2, the forces on the various portions of the base unit 1 are relatively uniform, so that the structure is stable and sturdy and is not easily damaged. And the mounting plate 112 is supported at a certain height via the base frame 111 and the base plate 113. And the mounting plate 112 is spaced at an interval in a spaced arrangement with a supporting countertop such as ground, floor surface, in order to form a spherical recessed space capable of placing an object on a lower side of the base structure 11.

As shown in FIG. 6, in some specific embodiments, a number of second support components 114 for providing support force are disposed in each lower part of the base frame 111, the mounting plate 112, and the base plate 113 respectively. The second support components 114 are provided as block-like structures spaced at an interval and linearly protruding along a lower surface of the base frame 111, the mounting plate 112, or the base plate 113. The base structure 11 is made of plastic material, and processed and molded by production processes such as injection molding, and blow molding, so as to facilitate mass production. And the second support components 114 are used to strengthen the structural strength of the base frame 111, the mounting plate 112, and the base plate 113, and to improve the stability and the carrying capacity of the structure of the base structure 11. In other embodiments, it is further possible to provide second support components 114 only on any one or two of the structures of the base frame 111, the mounting plate 112, and the base plate 113; and it is further capable of strengthening the structural strength of the base structure 11 to a certain extent. The base structure 11 can also be made of other materials, such as metal, wood, or the like.

In some specific embodiments, a number of second support components 114 are provided. Wherein each of the second support components 114 includes second support components 114 in a circular structure on a lower surface of the mounting plate 112, and a plurality of second support components 114 in a strip structure and arranged in a clockwise direction with the center of the mounting plate 112. The second support components 114 in circular structure are arranged in coaxial arrangement with the connecting shaft 2221, and the radius of the second support components 114 in circular structure is configured to be greater than a radius of the connecting shaft 2221. A mounting base 1121 extends downwardly from a lower surface of the mounting plate 112 and arranged in correspondence with the mounting channel 110 through a center of the mounting plate 112. The mounting structure 12 is provided on the mounting base 1121. And the connecting shaft 2221, the mounting channel 110, and the mounting base 1121 are all arranged at an angle with the support interface 10, which angle is configured to be greater than 75° and less than 90°, in particular, greater than 80° and less than 90°, which can allow the child to clearly experience the sensation of ascending and descending during the rotation process, while ensuring the safety of the sensory integration training of the child. And the plurality of second support components 114 in a strip-shaped structure are arranged on an inner side of the second support components 114 in the circularly-structure. And one end of each of the plurality of second support components 114 in a strip-shaped structure is combined with the mounting base 1121; and another end of each of the plurality of second support components 114 in a strip-shaped structure is combined with the second support components 114 in the circular structure, thereby making the structure of mounting plate 112 more stable and solid. The second support components 114 on a lower surface of the base plate 113 are arranged in a strip-like structure. And one end of a part of the second support components 114 in the strip-like structure is combined with the second support components 114 in the circular structure on a lower surface of the mounting structure 12. And the other end of a part of the second support components 114 in the strip-like structure is combined with the flange structure on the edge of the plate surface of the base plate 113, making the structure of the base plate 113 more stable and sturdy, and capable of providing direct and strong support for the pressure force exerted on the base structure 11 at various angles when the child rides on the carrying portion 2111, and avoiding breakage of the mounting plate 112 or the base plate 113. The base frame 111 is provided as a double-ring structure combined with each other at an upper end of either ring of the double-ring structure. The second support components 114 on a lower surface of the base frame 111 are provided as a strip structure, and the second support components 114 are arranged in a clockwise direction from the center of the base frame 111. And one end of the second support components 114 is combined with an outer ring of the double-ring structure; and the other end of the second support components 114 is combined with an inner ring of the double-ring structure, so that the structure of the base frame 111 is more stable and sturdy. The support interface 10 is arranged at a bottom of the double-ring structure. And in this embodiment, an anti-slip mat is mounted and arranged within the double-ring structure. And a bottom of the double-ring structure and a bottom surface of the anti-slip mat together form the support interface 10. In other embodiments, an anti-slip mat may also be provided at a bottom of the double-ring structure; a support interface 10 may also be formed entirely from a bottom of the double-ring structure, or be formed entirely from a bottom surface of the anti-slip mat; and the second support components 114 may be provided with other shaped structures such as a curved structure, all of which can be used to strengthen the structural strength of the mounting plate 112.

As shown in FIG. 5, in some specific embodiments, a open-worked structure 1130 is provided on the base plate 113 through the base plate 113 from an outer surface of the base plate 113 to the inner surface of the base plate 113. On the one hand, the open-worked structure 1130 can save materials and production costs; and on the other hand, the open-worked structure 1130 is connected to the spherical recess space formed on a lower side of the base structure 11, and can be used as a storage channel for the spherical recess space.

In some specific embodiments, the open-worked structure 1130 includes a plurality of first open-worked channels 1131 arranged along a circumferential direction of the mounting plate 112. The first open-worked channels 1131 extends from the vicinity of the base frame 111 toward the vicinity of the mounting plate 112. The first open-worked channels 1131 are spaced in a uniform interval. And a base member 1133 is formed between two adjacent first open-worked channels 1131. The base member 1133 is a plate-like structure. An upper end of the base member 1133 is connected to the mounting plate 112 as an integral structure; and a lower end of the base member 1133 is connected to the base frame 111 as an integral structure. In this embodiment, the first open-worked channel 1131 is configured as a fan-shaped structure. And a distance between the two sides of the base member 1133 gradually increases from a lower end of the base member 1133 to an upper end of the base member 1133, so as to maximize the area of the first open-worked channel 1131 while ensuring that the mounting plate 112 is stably supported, more economically saving production costs, and more convenient for a child to place or take objects into/from a spherical recessed space via the first open-worked channel 1131.

In some specific embodiments, the open-worked structure 1130 further includes a plurality of second open-worked channels 1132 arranged along a circumferential direction of the mounting plate 112. The second open-worked channels 1132 extends from the vicinity of the mounting plate 112 towards the vicinity of a lower end of the base member 1133, further saving production costs. A base portion 11331 is formed between two adjacent channels, that is, a first open-worked channel 1131 and a second open-worked channel 1132. An upper end of the base portion 11331 is connected to the mounting plate 112 as an integrated structure, and a lower end of the base portion 11331 is connected to the base frame 111 as an integrated structure.

In some specific embodiments, upper ends of the two base portions 11331 arranged on both sides of the first open-worked channel 1131 are connected with each other via a circular arc surface transition; and lower ends of the two base portions 11331 arranged on both sides of the first open-worked channel 1131 are respectively connected with the base frame 111 via a circular arc surface transition. Compared to being connected via a transition through two intersecting planes, the forces of parts of the structures of the mounting plate 112, the base plate 113, and the base frame 111 are more uniform and less likely to be damaged. And an inner side walls of the first open-worked channel 1131 are more rounded and smooth, and are less likely to scratch a child.

As shown in FIGs. 1-2, 8, in some specific embodiments, the carrying structure 21 is configured as a circular disk structure with a simple structure; and grip channels 2115 are provided respectively on the opposing sides of the carrying plate 211 for the operator's finger to reach into, through the carrying plate 211; and the grip member 2112 is arranged on an outer side of the grip channel 2115, which is convenient for the child to grasp the grip member 2112. The height of the grip member 2112 is higher than the height of the center point of the carrying portion 2111. And the gripping angle is more in line with the structure of the human body, for better comfort.

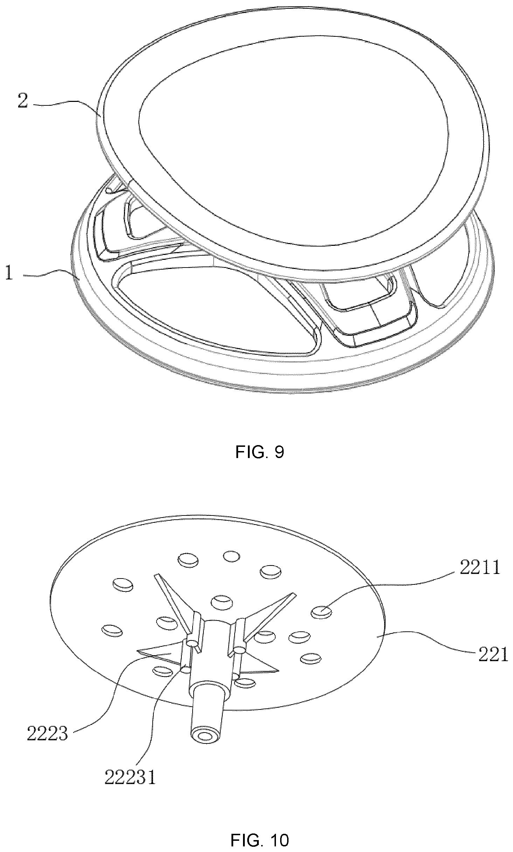

As shown in FIGs. 9-11, as a second embodiment of the present disclosure, there is also provided a sensory integration carousel for a child. And the main difference of the second embodiment relative to the first embodiment is that: a reinforced column 22231 is further provided on the connecting plate 2223; an upper end of the reinforced column 22231 is connected to a lower surface of the supporting member 221; and the reinforced column 22231 is arranged in parallel with the connecting shaft 2221 for further strengthening the stability and load carrying capacity of the structure of the supporting member 221. A number of positioning channels 2211 are provided on the supporting member 221 across a top surface of the supporting member 221 and a bottom surface of the supporting member 221. And a number of positioning pillars 2114 are provided in the first region 2131 in correspondence with the positioning channels 2211. The positioning pillars 2114 are arranged in the positioning channels 2211, and are pressed against or combined with the positioning channels 2211. An upper end of the positioning pillar 2114 is combined with a top surface of the first region 2131; and a lower end of the positioning pillar 2114 is combined with a bottom surface of the first region 2131, thereby further securely wrapping and fixing the supporting member 221 within the first region 2131, and avoiding circumferential movement of the supporting member 221 with respect to the carrying plate 211.

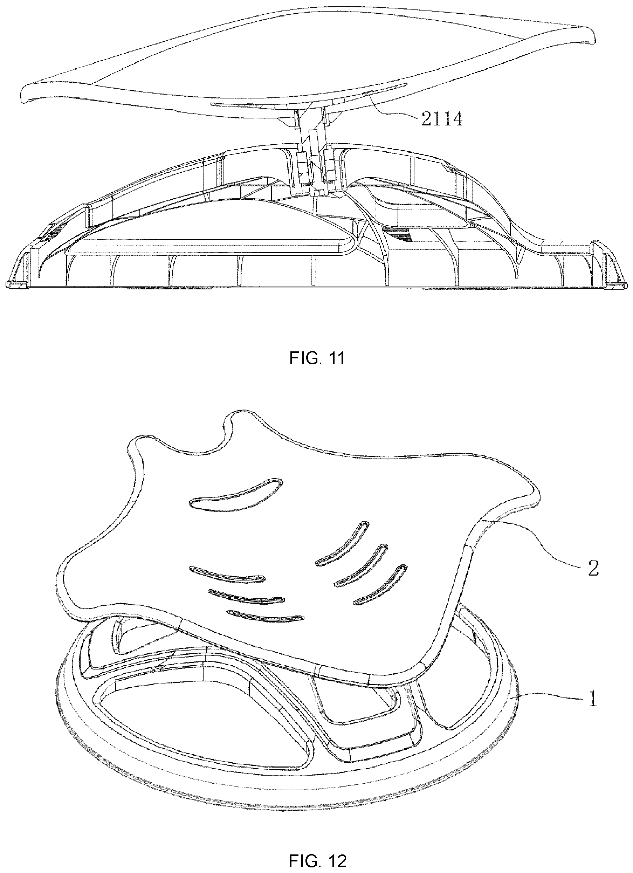

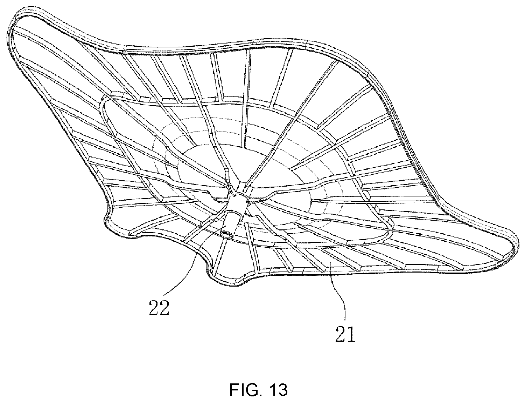

As shown in FIGs. 12-13, as the third embodiment of the present disclosure, a sensory integration carousel for a child is also provided. The main difference between the third embodiment and the first embodiment is that: the carrying structure 21 is configured as a fish-shaped structure, which is richer in shape and more capable of stimulating the child's interest in sensory integration training. In other embodiments, the carrying structure 21 can also be configured as other animal structures such as a pig, a cow, and a duck, or other animal structures such as triangular, polygonal, and a flower.

The scope of the invention is defined by the claims.

## Claims

1. A sensory integration carousel for a child, comprising:
a base unit (1), comprising a base structure (11) for placing on a support countertop surface and a mounting structure (12) provided in an upper part of the base structure, wherein, a support interface (10) is formed at a lower part of the base structure and in a circumferential direction for supporting said carousel on said support countertop support surface, and an outer surface of the base structure has an arc shape in a direction of the lower part of the base structure from a top of the base structure;
the mounting structure, comprising a mounting channel (110) through the base structure, a mounting support component (121) disposed within the mounting channel, and a connecting channel (120) disposed along a center of the mounting support component and through the base structure;
a carousel unit, comprising a carrying structure and a connecting structure connected to a lower portion of the carrying structure; wherein, the carrying structure is connected with the connecting structure as an integrated structure, and a carrying portion is disposed at an upper portion of the carrying structure for supporting articles in use, said support surface having an arc shape;
the connecting structure, comprising a supporting member (221) wrapped by a lower part of the carrying structure and a connecting member (222) connected to the supporting member; wherein, a lower part of the connecting member is disposed as a rotation shaft (2222); and the rotation shaft is embedded in the connecting channel and connected to the base unit; and the carousel unit is arranged at an angle to the support interface of the base unit after the carousel unit is connected to the base unit via the rotation shaft; and the carousel unit is rotatably disposed along an axial direction of the rotation shaft via the rotation shaft relative to the base unit.

2. The sensory integration carousel for the child according to claim 1, wherein: the carrying structure comprises a carrying plate (211) and a grip member (2112) provided on the carrying plate for gripping when the carrying structure is driven to rotate, wherein, the carrying portion is provided as a panel structure formed from an upper surface of the carrying plate in a circumferential direction, and the grip member comprises a portion of an external flange of the carrying portion.

3. The sensory integration carousel for the child according to claim 2, wherein: a number of first support components for providing a support force is provided in a lower portion of the carrying plate, and the first support components are provided as a block-like structure spaced at an interval and arranged linearly along a lower surface of the carrying plate and protruding from a bottom end surface of the carrying plate.

4. The sensory integration carousel for the child according to claim 3, wherein: the first support components are provided as a strip structure or a circular structure or a curved structure.

5. The sensory integration carousel for the child according to claim 3, wherein: the carrying plate has an external flange (2113), and the external flange are provided as bosses distributed along an outer circumference of the carrying plate and formed by extending in a direction toward a bottom of the carrying portion from an upper surface of the carrying portion, and an end of the first support components is bonded to an inner surface of a portion of the external flange of the carrying plate.

6. The sensory integration carousel for the child according to claim 1, wherein: the connecting structure is made of a metallic material, and an upper part of the connecting structure is completely covered by a lower structure of the carrying structure;
a wrapping region (213) is provided in a lower portion of the carrying structure, the supporting member is located within the wrapping region and covered by an outer end face of the carrying structure;
the connecting member comprises a connecting shaft (2221) connected to the supporting member, and a lower part of the connecting shaft forms the rotation shaft, and a connecting plate (2223) protrudes outwardly at an upper part of the connecting shaft and is arranged in a length direction of the connecting shaft, and all or part of a structure of an upper part of the connecting shaft and of the connecting plate are located within the wrapping region and covered by an outer end face of the carrying structure.

7. The sensory integration carousel for the child according to claim 6, wherein: the supporting member is provided as a panel structure corresponding to an arrangement direction of the carrying portion, and the connecting plates are arranged at an interval along a circumferential direction of the connecting shaft, and each connecting plate is arranged along a radial direction of the connecting shaft, and connected vertically with a lower surface of the supporting member.

8. The sensory integration carousel for the child according to claim 6, wherein: the carrying structure comprises a carrying plate, a first limit member (214) protruding from a lower surface of the carrying plate and arranged in correspondence with an upper part of the connecting shaft, and a second limit member (215) protruding from a lower surface of the carrying plate and arranged in correspondence with the connecting plate; and the carrying portion is configured as a panel structure formed in a circumferential direction from an upper surface of the carrying plate; and the wrapping region comprises a first region (2131) disposed within a lower structure of the carrying plate, a second region (2132) disposed within the first limit member, and a third region (2133) disposed within the second limit member; and the supporting member is wrapped within the first region and covered by an outer end surface of the carrying plate; and all or part of a structure of an upper part of the connecting shaft is wrapped within the second region and covered by an outer end surface of the first limit member; and all or part of the structure of the connecting plate being wrapped within the third region and covered by an outer end surface of the second limit member.

9. The sensory integration carousel for the child according to claim 1, wherein: the mounting support component is provided as at least one bearing (1211), and an upper opening (1101), and a lower opening (1102) of the mounting channel (110) have a diameter smaller than an outer diameter of the bearing.

10. The sensory integration carousel for the child according to claim 9, wherein: the bearings are provided in 2 or more, and the bearings are stacked along a height direction of the mounting channel; and the bearings comprise an outer sleeves limited in the mounting channel along a height direction of the mounting channel, and an inner sleeves rotatably connected to an inner side of the outer sleeves; wherein the inner sleeves are arranged in coaxial arrangement with the outer sleeves, and centers of the inner sleeves are combined with each other to form the connecting channel;
a limit bracket (2224) is formed in an upper part of the rotation shaft protruding outwardly in its circumferential direction; and a butt joint portion (2225) is provided at a lower end of the rotation shaft for engagement connecting with a fastening structure (223); and the rotation shaft is capable to extend from an upper end of the connecting channel into the connecting channel and is limited relative to a height direction of the connecting channel by being clamped between the limit bracket and the fastening structure by the inner sleeves of the bearings.

11. The sensory integration carousel for the child according to any one of claims 1 to 10, wherein: the base structure comprises a base frame (111) at a bottom of the base structure, a mounting plate (112) at a top of the base structure, and a base plate (113) arranged along a circumferential direction of the mounting plate; and an upper end of the base plate is connected to the mounting plate as an integrated structure; a lower end of the base plate is connected to the base frame as an integrated structure; and outer surfaces of the mounting plate, the base plate, and the base frame are connected in a smooth transition, and form an arc support structure extending from a top of the mounting plate to a bottom of the base frame; and the supporting interface is arranged at the bottom of the base frame; and the mounting structure is arranged on the mounting plate.

12. The sensory integration carousel for the child according to claim 11, wherein: a number of second support components (114) for providing a support force are disposed in a lower portion of the base frame and/or the mounting plate and/or the base plate; the second support components are provided in a block-like structure spaced at an interval and linearly protruding along a lower surface of the base frame and/or the mounting plate and/or the base plate.

13. The sensory integration carousel for the child according to claim 11, wherein: a open-worked structure (1130) is provided from an outer surface of the base plate to an inner surface of the base plate, through the base plate.

14. The sensory integration carousel for the child according to claim 13, wherein: the open-worked structure comprises a plurality of first open-worked channels (1131) arranged along a circumferential direction of the mounting plate; and the first open-worked channels are arranged extending from a vicinity of the base frame towards a vicinity of the mounting plate; and a base member (1133) is formed between two adjacent first open-worked channels; an upper end of the base member is connected to the mounting plate as an integrated structure; and a lower end of the base member is connected to the base frame as an integrated structure.

15. The sensory integration carousel for the child according to claim 14, wherein: the open-worked structure further comprises a plurality of second open-worked channels (1132) arranged along a circumferential direction of the mounting plate; and the second open-worked channels are arranged extending from a vicinity of the mounting plate towards a vicinity of a lower end of the base member; and a base portion (11331) is formed between two adjacent channels, that is, the first open-worked channels and the second open-worked channel; an upper end of the base portion is connected to the mounting plate as an integrated structure; and a lower end of the base portion is connected to the base frame as an integrated structure.

## Patentansprüche

1. Ein sensorischer Integrationskreisel für ein Kind, umfassend:
eine Basiseinheit (1), umfassend eine Basisstruktur (11) zum Aufstellen auf einer Träger-Arbeitsplattenoberfläche und eine in einem oberen Teil der Basisstruktur vorgesehene Montagestruktur (12), wobei in einem unteren Teil der Basisstruktur und in einer Umfangsrichtung eine Stützschnittstelle (10) zum Abstützen des genannten Kreisels auf der genannten Träger-Arbeitsplattenoberfläche ausgebildet ist, und eine Außenfläche der Basisstruktur in einer Richtung des unteren Teils der Basisstruktur von einer Oberseite der Basisstruktur aus eine Bogenform aufweist;
die Montagestruktur, umfassend einen Montagekanal (110) durch die Basisstruktur, eine innerhalb des Montagekanals angeordnete Montage-Stützkomponente (121) und einen entlang einer Mitte der Montage-Stützkomponente und durch die Basisstruktur hindurch angeordneten Verbindungskanal (120);
eine Kreiseleinheit, umfassend eine Tragstruktur und eine mit einem unteren Abschnitt der Tragstruktur verbundene Verbindungsstruktur; wobei die Tragstruktur als integrierte Struktur mit der Verbindungsstruktur verbunden ist, und ein Tragabschnitt an einem oberen Abschnitt der Tragstruktur zum Tragen von Gegenständen im Gebrauch angeordnet ist, wobei genannte Tragfläche eine Bogenform aufweist;
die Verbindungsstruktur, umfassend ein von einem unteren Teil der Tragstruktur umhülltes Stützelement (221) und ein mit dem Stützelement verbundenes Verbindungselement (222); wobei ein unterer Teil des Verbindungselements als eine Drehwelle (2222) ausgebildet ist; und die Drehwelle in den Verbindungskanal eingebettet und mit der Basiseinheit verbunden ist; und die Kreiseleinheit nach dem Verbinden der Kreiseleinheit mit der Basiseinheit über die Drehwelle in einem Winkel zu der Stützschnittstelle der Basiseinheit angeordnet ist; und die Kreiseleinheit entlang einer Axialrichtung der Drehwelle über die Drehwelle relativ zu der Basiseinheit drehbar angeordnet ist.

2. Der sensorische Integrationskreisel für das Kind nach Anspruch 1, wobei: die Tragstruktur eine Tragplatte (211) und ein an der Tragplatte vorgesehenes Griffelement (2112) zum Greifen, wenn die Tragstruktur zum Rotieren angetrieben wird, umfasst, wobei der Tragabschnitt als eine von einer oberen Oberfläche der Tragplatte in einer Umfangsrichtung ausgebildete Plattenstruktur vorgesehen ist, und das Griffelement einen Teil eines Außenflanschs des Tragabschnitts umfasst.

3. Der sensorische Integrationskreisel für das Kind nach Anspruch 2, wobei: eine Anzahl erster Stützkomponenten zum Bereitstellen einer Stützkraft in einem unteren Abschnitt der Tragplatte vorgesehen ist, und die ersten Stützkomponenten als blockartige Struktur vorgesehen sind, die in einem Abstand voneinander beabstandet und linear entlang einer unteren Oberfläche der Tragplatte angeordnet sind und von einer unteren Endoberfläche der Tragplatte hervorstehen.

4. Der sensorische Integrationskreisel für das Kind nach Anspruch 3, wobei: die ersten Stützkomponenten als Streifenstruktur oder Kreisstruktur oder gekrümmte Struktur vorgesehen sind.

5. Der sensorische Integrationskreisel für das Kind nach Anspruch 3, wobei: die Tragplatte einen Außenflansch (2113) aufweist, und der Außenflansch als entlang eines Außenumfangs der Tragplatte verteilte Vorsprünge vorgesehen ist, die durch Erstrecken in eine Richtung auf einen Boden des Tragabschnitts zu von einer oberen Oberfläche des Tragabschnitts aus gebildet sind, und ein Ende der ersten Stützkomponenten an eine innere Oberfläche eines Abschnitts des Außenflanschs der Tragplatte geklebt ist.

6. Der sensorische Integrationskreisel für das Kind nach Anspruch 1, wobei: die Verbindungsstruktur aus einem metallischen Material hergestellt ist und ein oberer Teil der Verbindungsstruktur vollständig durch eine untere Struktur der Tragstruktur bedeckt ist;
ein Umhüllungsbereich (213) in einem unteren Abschnitt der Tragstruktur vorgesehen ist, das Stützelement innerhalb des Umhüllungsbereichs angeordnet und durch eine äußere Endfläche der Tragstruktur bedeckt ist;
das Verbindungselement eine mit dem Stützelement verbundene Verbindungswelle (2221) umfasst, und ein unterer Teil der Verbindungswelle die Drehwelle bildet, und eine Verbindungsplatte (2223) an einem oberen Teil der Verbindungswelle nach außen hervorsteht und in einer Längsrichtung der Verbindungswelle angeordnet ist, und die gesamte oder ein Teil einer Struktur eines oberen Teils der Verbindungswelle und der Verbindungsplatte innerhalb des Umhüllungsbereichs angeordnet und durch eine äußere Endfläche der Tragstruktur bedeckt ist.

7. Der sensorische Integrationskreisel für das Kind nach Anspruch 6, wobei: das Stützelement als eine Plattenstruktur vorgesehen ist, die einer Anordnungsrichtung des Tragabschnitts entspricht, und die Verbindungsplatten in einem Abstand entlang einer Umfangsrichtung der Verbindungswelle angeordnet sind, und jede Verbindungsplatte entlang einer Radialrichtung der Verbindungswelle angeordnet und senkrecht mit einer unteren Oberfläche des Stützelements verbunden ist.

8. Der sensorische Integrationskreisel für das Kind nach Anspruch 6, wobei: die Tragstruktur eine Tragplatte, ein von einer unteren Oberfläche der Tragplatte hervorstehendes und einem oberen Teil der Verbindungswelle entsprechend angeordnetes erstes Begrenzungselement (214) und ein von einer unteren Oberfläche der Tragplatte hervorstehendes und der Verbindungsplatte entsprechend angeordnetes zweites Begrenzungselement (215) umfasst; und der Tragabschnitt als eine in einer Umfangsrichtung von einer oberen Oberfläche der Tragplatte ausgebildete Plattenstruktur konfiguriert ist; und der Umhüllungsbereich einen ersten Bereich (2131), der innerhalb einer unteren Struktur der Tragplatte angeordnet ist, einen zweiten Bereich (2132), der innerhalb des ersten Begrenzungselements angeordnet ist, und einen dritten Bereich (2133), der innerhalb des zweiten Begrenzungselements angeordnet ist, umfasst; und das Stützelement innerhalb des ersten Bereichs umhüllt und durch eine äußere Endoberfläche der Tragplatte bedeckt ist; und die gesamte oder ein Teil einer Struktur eines oberen Teils der Verbindungswelle innerhalb des zweiten Bereichs umhüllt und durch eine äußere Endoberfläche des ersten Begrenzungselements bedeckt ist; und die gesamte oder ein Teil der Struktur der Verbindungsplatte innerhalb des dritten Bereichs umhüllt und durch eine äußere Endoberfläche des zweiten Begrenzungselements bedeckt ist.

9. Der sensorische Integrationskreisel für das Kind nach Anspruch 1, wobei: die Montage-Stützkomponente als mindestens ein Lager (1211) vorgesehen ist, und eine obere Öffnung (1101) und eine untere Öffnung (1102) des Montagekanals (110) einen kleineren Durchmesser als einen Außendurchmesser des Lagers aufweisen.

10. Der sensorische Integrationskreisel für das Kind nach Anspruch 9, wobei: zwei oder mehr Lager vorgesehen sind, und die Lager entlang einer Höhenrichtung des Montagekanals gestapelt sind; und die Lager Außenhülsen umfassen, die in dem Montagekanal entlang einer Höhenrichtung des Montagekanals begrenzt sind, und Innenhülsen, die drehbar mit einer Innenseite der Außenhülsen verbunden sind; wobei die Innenhülsen koaxial mit den Außenhülsen angeordnet sind und Zentren der Innenhülsen miteinander kombiniert sind, um den Verbindungskanal zu bilden;
ein Begrenzungsbügel (2224) an einem oberen Teil der Drehwelle ausgebildet ist, der in ihrer Umfangsrichtung nach außen hervorsteht; und ein Stoßverbindungsabschnitt (2225) an einem unteren Ende der Drehwelle zum eingreifenden Verbinden mit einer Befestigungsstruktur (223) vorgesehen ist; und die Drehwelle sich von einem oberen Ende des Verbindungskanals in den Verbindungskanal erstrecken kann und relativ zu einer Höhenrichtung des Verbindungskanals dadurch begrenzt ist, dass sie zwischen dem Begrenzungsbügel und der Befestigungsstruktur durch die Innenhülsen der Lager eingeklemmt ist.

11. Der sensorische Integrationskreisel für das Kind nach einem der Ansprüche 1 bis 10, wobei: die Basisstruktur einen Basisrahmen (111) an einem Boden der Basisstruktur, eine Montageplatte (112) an einer Oberseite der Basisstruktur und eine entlang einer Umfangsrichtung der Montageplatte angeordnete Basisplatte (113) umfasst; und ein oberes Ende der Basisplatte als integrierte Struktur mit der Montageplatte verbunden ist; ein unteres Ende der Basisplatte als integrierte Struktur mit dem Basisrahmen verbunden ist; und Außenflächen der Montageplatte, der Basisplatte und des Basisrahmens in einem glatten Übergang verbunden sind und eine bogenförmige Stützstruktur bilden, die sich von einer Oberseite der Montageplatte bis zu einem Boden des Basisrahmens erstreckt; und die Stützschnittstelle an dem Boden des Basisrahmens angeordnet ist; und die Montagestruktur auf der Montageplatte angeordnet ist.

12. Der sensorische Integrationskreisel für das Kind nach Anspruch 11, wobei: eine Anzahl zweiter Stützkomponenten (114) zum Bereitstellen einer Stützkraft in einem unteren Abschnitt des Basisrahmens und/oder der Montageplatte und/oder der Basisplatte angeordnet ist; die zweiten Stützkomponenten als blockartige Struktur vorgesehen sind, die in einem Abstand voneinander beabstandet und linear entlang einer unteren Oberfläche des Basisrahmens und/oder der Montageplatte und/oder der Basisplatte hervorsteht.

13. Der sensorische Integrationskreisel für das Kind nach Anspruch 11, wobei: eine durchbrochene Struktur (1130) von einer Außenfläche der Basisplatte zu einer Innenfläche der Basisplatte durch die Basisplatte hindurch vorgesehen ist.

14. Der sensorische Integrationskreisel für das Kind nach Anspruch 13, wobei: die durchbrochene Struktur eine Mehrzahl erster durchbrochener Kanäle (1131) umfasst, die entlang einer Umfangsrichtung der Montageplatte angeordnet sind; und die ersten durchbrochenen Kanäle sich von einer Umgebung des Basisrahmens zu einer Umgebung der Montageplatte hin erstrecken; und ein Basiselement (1133) zwischen zwei benachbarten ersten durchbrochenen Kanälen ausgebildet ist; ein oberes Ende des Basiselements als integrierte Struktur mit der Montageplatte verbunden ist; und ein unteres Ende des Basiselements als integrierte Struktur mit dem Basisrahmen verbunden ist.

15. Der sensorische Integrationskreisel für das Kind nach Anspruch 14, wobei: die durchbrochene Struktur ferner eine Mehrzahl zweiter durchbrochener Kanäle (1132) umfasst, die entlang einer Umfangsrichtung der Montageplatte angeordnet sind; und die zweiten durchbrochenen Kanäle sich von einer Umgebung der Montageplatte zu einer Umgebung eines unteren Endes des Basiselements hin erstrecken; und ein Basisabschnitt (11331) zwischen zwei benachbarten Kanälen, nämlich den ersten durchbrochenen Kanälen und dem zweiten durchbrochenen Kanal, ausgebildet ist; ein oberes Ende des Basisabschnitts als integrierte Struktur mit der Montageplatte verbunden ist; und ein unteres Ende des Basisabschnitts als integrierte Struktur mit dem Basisrahmen verbunden ist.

## Revendications

1. Un carrousel d'intégration sensorielle pour un enfant, comprenant :
une unité de base (1), comprenant une structure de base (11) destinée à être placée sur une surface de comptoir support et une structure de montage (12) prévue dans une partie supérieure de la structure de base, dans lequel une interface de support (10) est formée dans une partie inférieure de la structure de base et dans une direction circonférentielle pour supporter ledit carrousel sur ladite surface de comptoir support, et une surface extérieure de la structure de base présente une forme arquée dans une direction de la partie inférieure de la structure de base à partir d'un sommet de la structure de base ;
la structure de montage, comprenant un canal de montage (110) traversant la structure de base, un composant de support de montage (121) disposé dans le canal de montage, et un canal de connexion (120) disposé le long d'un centre du composant de support de montage et traversant la structure de base ;
une unité de carrousel, comprenant une structure de portage et une structure de connexion reliée à une partie inférieure de la structure de portage ; dans lequel la structure de portage est reliée à la structure de connexion en tant que structure intégrée, et une partie de portage est disposée au niveau d'une partie supérieure de la structure de portage pour supporter des articles en utilisation, ladite surface de support ayant une forme arquée ;
la structure de connexion, comprenant un élément de support (221) enveloppé par une partie inférieure de la structure de portage et un élément de connexion (222) relié à l'élément de support ; dans lequel une partie inférieure de l'élément de connexion est disposée comme un arbre de rotation (2222) ; et l'arbre de rotation est logé dans le canal de connexion et relié à l'unité de base ; et l'unité de carrousel est disposée à un angle par rapport à l'interface de support de l'unité de base après que l'unité de carrousel est reliée à l'unité de base via l'arbre de rotation ; et l'unité de carrousel est disposée de manière rotative le long d'une direction axiale de l'arbre de rotation via l'arbre de rotation par rapport à l'unité de base.

2. Le carrousel d'intégration sensorielle pour l'enfant selon la revendication 1, dans lequel : la structure de portage comprend une plaque de portage (211) et un élément de préhension (2112) prévu sur la plaque de portage pour être saisi lorsque la structure de portage est entraînée en rotation, dans lequel la partie de portage est prévue sous la forme d'une structure de panneau formée à partir d'une surface supérieure de la plaque de portage dans une direction circonférentielle, et l'élément de préhension comprend une partie d'un rebord extérieur de la partie de portage.

3. Le carrousel d'intégration sensorielle pour l'enfant selon la revendication 2, dans lequel : un certain nombre de premiers composants de support destinés à fournir une force de support est prévu dans une partie inférieure de la plaque de portage, et les premiers composants de support sont prévus sous la forme d'une structure en bloc espacée à intervalle et agencée linéairement le long d'une surface inférieure de la plaque de portage et faisant saillie à partir d'une surface d'extrémité inférieure de la plaque de portage.

4. Le carrousel d'intégration sensorielle pour l'enfant selon la revendication 3, dans lequel : les premiers composants de support sont prévus sous la forme d'une structure en bande, ou d'une structure circulaire, ou d'une structure courbe.

5. Le carrousel d'intégration sensorielle pour l'enfant selon la revendication 3, dans lequel : la plaque de portage présente un rebord extérieur (2113), et le rebord extérieur est prévu sous la forme de bossages répartis le long d'une circonférence extérieure de la plaque de portage et formés par une extension dans une direction vers un fond de la partie de portage à partir d'une surface supérieure de la partie de portage, et une extrémité des premiers composants de support est collée à une surface intérieure d'une portion du rebord extérieur de la plaque de portage.

6. Le carrousel d'intégration sensorielle pour l'enfant selon la revendication 1, dans lequel : la structure de connexion est faite d'un matériau métallique, et une partie supérieure de la structure de connexion est complètement recouverte par une structure inférieure de la structure de portage ;
une région d'enveloppement (213) est prévue dans une partie inférieure de la structure de portage, l'élément de support étant situé dans la région d'enveloppement et recouvert par une face d'extrémité extérieure de la structure de portage ;
l'élément de connexion comprend un arbre de connexion (2221) relié à l'élément de support, et une partie inférieure de l'arbre de connexion forme l'arbre de rotation, et une plaque de connexion (2223) fait saillie vers l'extérieur au niveau d'une partie supérieure de l'arbre de connexion et est agencée dans une direction de longueur de l'arbre de connexion, et tout ou partie d'une structure d'une partie supérieure de l'arbre de connexion et de la plaque de connexion est situé dans la région d'enveloppement et recouvert par une face d'extrémité extérieure de la structure de portage.

7. Le carrousel d'intégration sensorielle pour l'enfant selon la revendication 6, dans lequel : l'élément de support est prévu sous la forme d'une structure en panneau correspondant à une direction d'agencement de la partie de portage, et les plaques de connexion sont agencées à intervalle le long d'une direction circonférentielle de l'arbre de connexion, et chaque plaque de connexion est agencée le long d'une direction radiale de l'arbre de connexion, et reliée verticalement à une surface inférieure de l'élément de support.

8. Le carrousel d'intégration sensorielle pour l'enfant selon la revendication 6, dans lequel : la structure de portage comprend une plaque de portage, un premier élément de limitation (214) faisant saillie à partir d'une surface inférieure de la plaque de portage et agencé en correspondance avec une partie supérieure de l'arbre de connexion, et un deuxième élément de limitation (215) faisant saillie à partir d'une surface inférieure de la plaque de portage et agencé en correspondance avec la plaque de connexion ; et la partie de portage est configurée comme une structure en panneau formée dans une direction circonférentielle à partir d'une surface supérieure de la plaque de portage ; et la région d'enveloppement comprend une première région (2131) disposée dans une structure inférieure de la plaque de portage, une deuxième région (2132) disposée dans le premier élément de limitation, et une troisième région (2133) disposée dans le deuxième élément de limitation ; et l'élément de support est enveloppé dans la première région et recouvert par une surface d'extrémité extérieure de la plaque de portage ; et tout ou partie d'une structure d'une partie supérieure de l'arbre de connexion est enveloppé dans la deuxième région et recouvert par une surface d'extrémité extérieure du premier élément de limitation ; et tout ou partie de la structure de la plaque de connexion est enveloppé dans la troisième région et recouvert par une surface d'extrémité extérieure du deuxième élément de limitation.

9. Le carrousel d'intégration sensorielle pour l'enfant selon la revendication 1, dans lequel : le composant de support de montage est prévu sous la forme d'au moins un roulement (1211), et une ouverture supérieure (1101) et une ouverture inférieure (1102) du canal de montage (110) ont un diamètre inférieur à un diamètre extérieur du roulement.

10. Le carrousel d'intégration sensorielle pour l'enfant selon la revendication 9, dans lequel : les roulements sont au nombre de 2 ou plus, et les roulements sont empilés le long d'une direction de hauteur du canal de montage ; et les roulements comprennent des manchons extérieurs limités dans le canal de montage le long d'une direction de hauteur du canal de montage, et des manchons intérieurs reliés de manière rotative à un côté intérieur des manchons extérieurs ; dans lequel les manchons intérieurs sont agencés coaxialement avec les manchons extérieurs, et les centres des manchons intérieurs sont combinés les uns avec les autres pour former le canal de connexion ;
une bride de limitation (2224) est formée dans une partie supérieure de l'arbre de rotation faisant saillie vers l'extérieur dans sa direction circonférentielle ; et une portion de raccordement (2225) est prévue à une extrémité inférieure de l'arbre de rotation pour une connexion d'engagement avec une structure de fixation (223) ; et l'arbre de rotation est apte à s'étendre depuis une extrémité supérieure du canal de connexion dans le canal de connexion et est limité par rapport à une direction de hauteur du canal de connexion en étant serré entre la bride de limitation et la structure de fixation par les manchons intérieurs des roulements.

11. Le carrousel d'intégration sensorielle pour l'enfant selon l'une quelconque des revendications 1 à 10, dans lequel : la structure de base comprend un cadre de base (111) au fond de la structure de base, une plaque de montage (112) au sommet de la structure de base, et une plaque de base (113) agencée le long d'une direction circonférentielle de la plaque de montage ; et une extrémité supérieure de la plaque de base est reliée à la plaque de montage en tant que structure intégrée ; une extrémité inférieure de la plaque de base est reliée au cadre de base en tant que structure intégrée ; et des surfaces extérieures de la plaque de montage, de la plaque de base, et du cadre de base sont reliées en transition lisse, et forment une structure de support arquée s'étendant d'un sommet de la plaque de montage à un fond du cadre de base ; et l'interface de support est agencée au fond du cadre de base ; et la structure de montage est agencée sur la plaque de montage.

12. Le carrousel d'intégration sensorielle pour l'enfant selon la revendication 11, dans lequel : un certain nombre de seconds composants de support (114) pour fournir une force de support sont disposés dans une partie inférieure du cadre de base et/ou de la plaque de montage et/ou de la plaque de base ; les seconds composants de support sont prévus sous la forme d'une structure en bloc espacée à intervalle et faisant saillie de manière linéaire le long d'une surface inférieure du cadre de base et/ou de la plaque de montage et/ou de la plaque de base.

13. Le carrousel d'intégration sensorielle pour l'enfant selon la revendication 11, dans lequel : une structure ajourée (1130) est prévue à travers la plaque de base depuis une surface extérieure de la plaque de base vers une surface intérieure de la plaque de base.

14. Le carrousel d'intégration sensorielle pour l'enfant selon la revendication 13, dans lequel : la structure ajourée comprend une pluralité de premiers canaux ajourés (1131) agencés le long d'une direction circonférentielle de la plaque de montage ; et les premiers canaux ajourés sont agencés en s'étendant depuis un voisinage du cadre de base vers un voisinage de la plaque de montage ; et un élément de base (1133) est formé entre deux premiers canaux ajourés adjacents ; une extrémité supérieure de l'élément de base est reliée à la plaque de montage en tant que structure intégrée ; et une extrémité inférieure de l'élément de base est reliée au cadre de base en tant que structure intégrée.

15. Le carrousel d'intégration sensorielle pour l'enfant selon la revendication 14, dans lequel : la structure ajourée comprend en outre une pluralité de deuxièmes canaux ajourés (1132) agencés le long d'une direction circonférentielle de la plaque de montage ; et les deuxièmes canaux ajourés sont agencés en s'étendant depuis un voisinage de la plaque de montage vers un voisinage d'une extrémité inférieure de l'élément de base ; et une portion de base (11331) est formée entre deux canaux adjacents, à savoir les premiers canaux ajourés et le deuxième canal ajouré ; une extrémité supérieure de la portion de base est reliée à la plaque de montage en tant que structure intégrée ; et une extrémité inférieure de la portion de base est reliée au cadre de base en tant que structure intégrée.
